# EUROPÄISCHE PATENTSCHRIFT

(11) **EP 2 427 401 B1**
(45) Veröffentlichungstag und Bekanntmachung des Hinweises auf die Patenterteilung: **05.12.2012**
(21) Anmeldenummer: 10719929.1
(22) Anmeldetag: 27.04.2010
(51) Int. Cl.: H02G 11/00, B66C 13/12

(54) **AUFHÄNGEELEMENT EINER SCHLEPPLEITUNGSANORDNUNG**
SUSPENSION ELEMENT OF A TRAILING CABLE ASSEMBLY
ELÉMENT DE SUSPENSION D'UN DISPOSITIF À CÂBLE PENDANT

(30) Priorität: 06.05.2009 DE 102009020096
(43) Veröffentlichungstag der Anmeldung: 14.03.2012
(73) Patentinhaber: Demag Cranes & Components GmbH, 58300 Wetter (DE)
(72) Erfinder: SPIES, Gerd, 58313 Herdecke (DE); FITZLER, Stefan, 58636 Iserlohn (DE); MÜLLER, Sven, 58339 Breckerfeld (DE)
(74) Vertreter: Moser, Jörg Michael
(86) Internationale Anmeldenummer: PCT/EP2010/055645
(87) Internationale Veröffentlichungsnummer: WO 2010/145875

(56) Entgegenhaltungen:
- DE-A1- 3 409 628
- DE-A1- 10 009 245
- JP-A- 63 057 489

## Beschreibung

Die Erfindung betrifft eine Anordnung mit einer hohlprofilförmigen und über einen Längsspalt offenen Schiene und mit mehreren entlang der Schiene bewegbaren Aufhängeelementen, an denen eine Energieleitung befestigt ist.

In dem deutschsprachigen Firmenprospekt der Demag Cranes & Components GmbH, Wetter, Deutschland mit dem Titel "Demag-KBK 25-System" (Stand: Februar 2007) sind beispielsweise Stromzuführungen mit Schleppleitungen für Katzen, Krane, Einschienenbahnen und Beschickungs- und Bearbeitungsmaschinen beschrieben. Derartige Schleppleitungen kommen neben sogenannten Schleifleitungen zum Einsatz, wenn bewegbare elektrische Verbraucher wie beispielsweise Kranlaufkatzen mit einem elektrischen Fahrantrieb und mit einem elektrischen Hubantrieb mit elektrischer Energie versorgt werden müssen. Die Schleppleitung ist üblicher Weise als Flachleitung mit mehreren elektrischen Leitungen ausgebildet und über mehrere Aufhängeelemente an einer nach unten offen c-förmigen Schiene nach Art einer Girlande aufgehängt. Die Aufhängeelemente sind entlang der Schiene bewegbar, damit die Schleppleitung dem bewegbaren elektrischen Verbraucher folgen kann. Hierfür weisen die Aufhängeelemente ein Fahrwerk mit vier Rollen auf, die innerhalb der c-förmigen Schiene verfahrbar sind. Im Zuge der Montage werden die Fahrwerke von einem der Enden der Schiene in die Schiene eingeschoben. Die Enden der Schiene werden dann durch feststehende Verschlusselemente wie Kappen abgeschlossen. An dem Fahrwerk ist ein aus der Schiene nach unten heraus ragendes Halteteil aufgehängt, an dem die Flachleitung befestigt ist. Das Halteteil weist ein Auflageelement mit kreissegmentförmigem Querschnitt auf, auf dem die Flachleitung gegen ein Abknicken geschützt aufgelegt wird. Zusätzlich wird ein Fixierelement wie eine Schraub- oder Schnappverbindung von oben auf das Auflageelement aufgesetzt, um die Flachleitung auf dem Auflageelement festzuhalten. Das Auflageelement wird über einen Bügel an dem Fahrwerk aufgehängt. Für die Montage wird die Flachleitung von einem Ende durch die Bügel der Haltelemente der entlang der Schiene hintereinander angeordneten Aufhängeelemente eingefädelt und dann über die Fixierelemente befestigt.

Aus der deutschen Offenlegungsschrift DE 100 09 245 A1 ist bereits ein Leitungswagen für eine Schleppleitung bekannt, dessen Halteteil derart ausgebildet ist, dass die Schleppleitung seitlich, dass heißt quer zur Fahrtrichtung des Leitungswagen, ein- und ausgebaut werden kann. Hierdurch ist es möglich den Leitungswagen bereits mit einer Schiene einer Stromzuführung zu verbinden, bevor die Schleppleitung an dem Leitungswagen befestigt wird.

Ein vergleichbarer Kabelwagen ist in der deutschen Offenlegungsschrift DE 34 09 628 A1 beschrieben. Dort ist das Halteteil für die Schleppleitung als Kunststoffschlaufe ausgebildet, die über eine Schnappverbindung an dem Kabelwagen befestigt wird-Zusätzlich ist ein Klemmband vorgesehen, mit dem die Schleppleitung zusätzlich innerhalb der Schlaufe fixiert wird.

Die japanische Offenlegungsschrift JP 63 057489 A offenbart Aufhängeklammern, über die eine Leitung, ein Kabel oder ein Seil an einer nach unten offenen c-förmigen Schiene aufgehängt ist. Jede der Aufhängeklammern besteht im Wesentlichen aus zwei u-förmig angeordneten Schenkeln, zwischen denen die Leitung eingelegt ist. Um die Aufhängeklammer an der Schiene aufzuhängen, sind an dem der Leitung abgewandten Ende der Schenkel seitlich auskragende Auflageschenkel vorgesehen. Die Aufhängeklammer stützt sich jedoch nicht direkt mit den Auflageschenkeln an Schenkeln der Schiene ab sondern an einem Gleitelement. Dementsprechend sind mehrere Gleitelemente vor der Montage der Aufhängeklammer in den Längsspalt der Schiene von einem Ende her in die Schiene eingebracht worden. Auch sind diese Gleitelemente entlang der Schiene verschiebbar. Für eine Montage ist die Aufhängeklammer in einer Montagestellung - das heißt die Schenkel sind zusammengedrückt - von unten durch eine Öffnung des hülsenförmigen Gleitelements soweit einführbar, bis die Auflageschenkel durch das Gleitelement hindurchgeführt sind. Dann entspannen sich die Schenkel durch Federwirkung in seitlicher Richtung und die Auflageschenkel kommen hinter dem Gleitelement auf dem Gleitelement zur Auflage. In der somit erreichten Betriebsstellung erstrecken sich die Auflageschenkel parallel zu dem Längsspalt der Schiene. Auf diese Weise lassen sich die Aufhängeklammern durch Zusammenwirken mit den Gleitelementen mittelbar in der Schiene aufhängen.

Ferner ist aus der deutschen Gebrauchsmusterschrift DE 1 931 764 U ein weiteres Aufhängeelement für eine Schleppleitung bekannt, das nicht als Fahrwerk mit vier Rollen ausgebildet ist, sondern als pilz- oder stempelförmiger Gleitschuh aus thermoplastischem oder duroplastischem Kunststoff.

Der vorliegenden Erfindung liegt die Aufgabe zu Grunde, eine Anordnung mit einer hohlprofilförmigen und über einen Längsspalt offenen Schiene und mit mehreren entlang der Schiene bewegbaren Aufhängeelementen, an denen eine Energieleitung befestigt ist, zu schaffen, deren Aufhängeelemente sich einfach montieren und austauschen lassen.

Diese Aufgabe wird durch eine Anordnung mit einer hohlprofilförmigen und über einen Längsspalt offenen Schiene und mit mehreren entlang der Schiene bewegbaren Aufhängeelementen, an denen eine Energieleitung befestigt ist, mit den Merkmalen des Anspruchs 1 gelöst. Vorteilhafte Ausgestaltungen der Erfindung sind in den Unteransprüchen 2 bis 15 angegeben.

Erfindungsgemäß wird bei einer Anordnung mit einer hohlprofilförmigen und über einen Längsspalt offenen Schiene und mit mehreren entlang der Schiene bewegbaren Aufhängeelementen, an denen eine Energieleitung befestigt ist, eine einfache Montage und ein einfacher Austausch der Aufhängeelemente dadurch erreicht, dass die Aufhängeelemente für eine Befestigung an der Schiene derart ausgestaltet sind, dass ein Tragteil von diesen von außen über den Längsspalt in einen Hohlraum der Schiene in einer Montagestellung einführbar ist und das Tragteil nach einer Bewegung aus der Montagestellung in eine Betriebsstellung den Längsspalt überbrückt und dass das Tragteil in der Betriebsstellung und in Längsrichtung der Schiene gesehen T-förmig ausgebildet ist und ein aus der Schiene heraus ragendes Stabteil und ein in der Schiene ruhendes Gleitteil aufweist, das im mittleren Bereich an dem Stabteil befestigt ist. Die erfindungsgemäßen Aufhängeelemente lassen sich somit einfach in den Längsspalt der offene Schiene einsetzen. Dies ist an jeder Stelle der Schiene möglich. Es ist nicht erforderlich, die Aufhängeelemente stirnseitig in die Schiene an deren Anfang oder Ende einzuführen. Dies erleichtert eine Montage und einen Austausch der Aufhängeelemente. Ein Austausch der Aufhängeelemente kommt beispielswiese bei einem Einsatz der erfindungsmäßen Anordnung in Gießereien vor, wo durch die rauen Umgebungsbedingungen es zu einem erhöhten Verschleiß der Aufhängeelemente kommt. Auch ein einfacher Austausch einzelner und insbesondere zwischen anderen Aufhängeelementen befindlicher Aufhängeelemente ist nun einfach durchführbar. Durch die T-förmige Gestalt wird ein sicheres Hintergreifen der Schiene in deren Hohlraum möglich.

Die erfindungsgemäßen Aufhängelemente eignen sich besonders für einen Einsatz in Verbindung mit Hängeförderern, wie beispielsweise Hallenkrane, Laufkranen und Brückenkranen, bei deren Betrieb die Aufhängeelemente gemeinsam mit der daran aufgehängten Energieleitung entlang der Schiene bewegt werden.

Konstruktiv vorteilhaft ist, dass das Stabteil zylinderförmig ist.

In einer ersten Ausgestaltungsalternative ist das Gleitteil quaderförmig ausgebildet und starr mit dem Stabteil verbunden.

In der Betriebsstellung des Aufhängeelementes gemäß der ersten Ausgestaltungsalternative wird eine sichere Verriegelung dadurch erreicht, dass an den Stabteilen jeweils mindestens ein Verriegelungselement angeordnet ist, das sich an der Schiene abstützt und das Tragteil an einer Bewegung aus der Betriebsstellung in die Montagestellung hindert.

Weiterhin ist vorteilhaft vorgesehen, dass das Verriegelungselement armförmig und federnd ausgebildet ist und in der Betriebsstellung in den Längsspalt der Schiene hinein ragt.

Die Sicherheit der Befestigung dieser Aufhängeelemente in der Schiene wird weiter dadurch erhöht, dass in redundanter Weise an jedem Aufhängeelement zwei Verriegelungselemente angeordnet sind.

In konstruktiv vorteilhafter Weise ist vorgesehen, dass das Verriegelungselement im Bereich des dem Gleitteil abgewandten Endes des Stabteils befestigt ist, in der Betriebsstellung des Aufhängeelementes gesehen in Richtung des Längsspalt geneigt ist und sich ausgehend von dem Stabteil verjüngt. Durch die sich verjüngende Ausbildung wird das Verriegelungselement federnd nachgiebiger und ein Hineinbewegen in den Längsspalt wird erleichtert. Die geneigte Ausrichtung erleichtert, dass das Verriegelungselement zur Erfüllung seiner Funktion in Eingriff mit der Schiene kommt, insbesondere in dessen Längsspalt eintauchen kann.

In einer zweiten Ausgestaltungsalternative ist das Gleitteil um eine Achse kippbar an dem dem Halteteil abgewandten Ende des Stabteils angeordnet und die Achse quer zur Längserstreckung des Stabteils ausgerichtet ist. In der Montagestellung kann somit das Gleitteil parallel zu dem Stabteil geklappt werden und dann durch den Längsspalt in die Schiene eingeführt werden. Anschließend klappt das Gleitteil in eine Position rechtwinklig zu dem Stabteil und kann somit in dieser Betriebsstellung nicht mehr aus dem Längsspalt heraus bewegt werden. Für den Fall, dass der Längsspalt der Schiene nach unten offen ist, wird das Stabteil durch die Schwerkraft in der Betriebsstellung gehalten.

In bevorzugter Ausgestaltung ist vorgesehen, dass das Gleitteil tellerförmig ausgebildet ist.

Besonders vorteilhaft ist vorgesehen, dass das Aufhängeelement neben dem Tragteil aus einem Halteteil besteht, an dem die Energieleitung aufgehängt ist. Somit sind die Funktionen der Befestigung des Aufhängeelementes an der Schiene und der Befestigung der Energieleitung an dem Aufhängeelement voneinander getrennt und das zugehörige Tragteil und Halteteil können speziell an diese Funktionen angepasst werden.

Da das Halteteil ein längliches Aufnahmeelement aufweist, dass die Energieleitung teilweise umschlingt, das an einem Ende über ein Verbindungselement an dem Tragteil befestigt ist und dessen anderes Ende über ein Verschließelement mit dem Halteteil nach Einlegen der Energieleitung verbindbar ist, kann die Energieleitung von dem Halteteil des Aufhängeelements an beliebiger Stelle entlang der Schiene befestigt oder für einen Austausch der Energieleitung oder des Aufhängeelements abgenommen werden. Da die Energieleitung seitlich in das Halteteil auf das Aufnahmeelement eingelegt und anschließend über das Verschließelement gesichert wird, muss die Energieleitung nicht aufwändig mit seinem Anfang in das erste und alle nachfolgenden Halteteile eingefädelt werden.

Die Energieleitung wird sicher von dem Halteteil gehalten, da das Verbindungselement nach Art eines einseitig offenen Radkastens mit einer Öffnung ausgebildet ist und das Verschüeßelement deckelartig ausgebildet ist und die Öffnung verschließt. Die Energieleitung wird somit bei einem hängenden Aufnahmeelement sicher in einem nach unten offenen u-förmigen Raum gehalten, der unten von dem Auflageelement und seitlich sowie oben von dem Verbindungselement und dem Verschließelement begrenzt wird.

In bevorzugter Ausgestaltung ist vorgesehen, dass die Energieleitung als Flachleitung mit mehreren elektrischen Leitungen ausgebildet ist. Hierdurch kann die Energieleitung, ohne Schaden zu nehmen, girlandenartig an der Vielzahl von entlang der Schiene angeordneten Aufhängeelementen befestigt werden. Im Bereich der Auflageelemente wird die Energieleitung etwa um 180° umgelenkt und somit durch die Verwendung einer Flachleitung geringer auf Knickung beansprucht.

Besonders vorteilhaft ist, dass die Schiene einen sich von dem Längsspalt aus erweiternden Hohlraum und einen c-förmigen Querschnitt hat und deren Längsspalt nach unten weist. Durch diese Ausgestaltung der Schiene wird die einfache Befestigung der Aufhängeelemente mit dem T-förmigen Tragteil möglich. In dem Hohlraum der Schiene werden durch die Form der Schiene die Auflageflächen für das Gleitteil des Tragteils zur Verfügung gestellt.

Das Aufhängeelement lässt sich besonders einfach als Kunststoffspritzgussteil herstellen.

Nachfolgend wird die Erfindung an Hand von zwei in einer Zeichnung dargestellten Ausführungsbeispielen näher beschrieben. Es zeigen:
Figur 1 eine Ansicht einer sogenannten Schleppleitungsanordnung mit einer Schiene, einer Energieleitung und einer Vielzahl von Aufhängeelementen,
Figur 2 eine perspektivische Ansicht eines Aufhängeelementes nach einer ersten Ausführungsform mit einem geöffneten Halteteil,
Figur 3 eine perspektivische Ansicht des Aufhängeelementes nach Figur 2 mit einem geschlossenen Halteteil,
Figur 4 eine Schnittansicht einer Schiene mit dem Aufhängeelement nach Figur 2 in einer Montagestellung,
Figur 5 eine Ansicht gemäß Figur 4 mit dem Aufhängeelement nach Figur 2 in einer Betriebsstellung,
Figur 6 eine Seitenansicht von Figur 5,
Figur 7 eine perspektivische Ansicht eines Aufhängeelementes nach einer zweiten Ausführungsform mit einem geöffneten Halteteil,
Figur 8 eine Schnittansicht einer Schiene mit dem Aufhängeelement nach Figur 7 in einer Montagestellung und
Figur 9 eine Ansicht gemäß Figur 8 mit dem Aufhängeelement nach Figur 7 in einer Betriebsstellung.

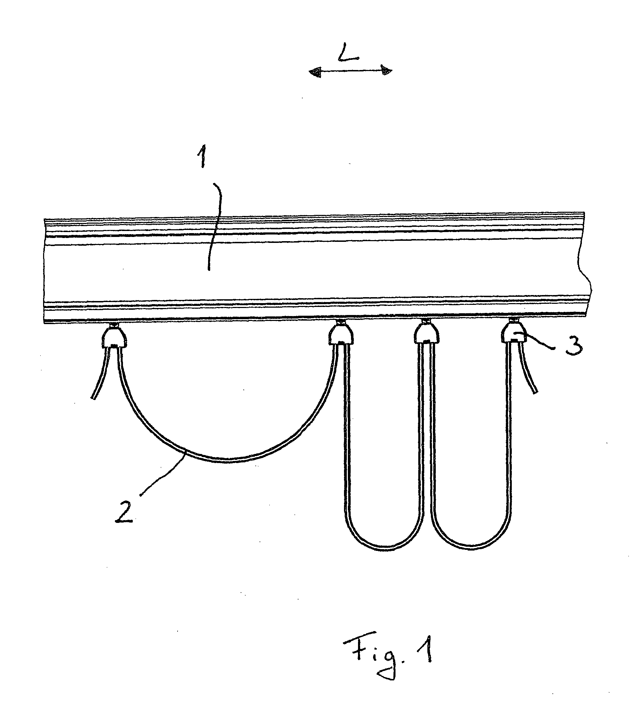

Die Figur 1 zeigt eine Ansicht einer sogenannten Schleppleitung, die zum Einsatz kommt, wenn bewegbare elektrische Verbraucher wie beispielsweise Kranlaufkatzen mit einem elektrischen Hubantrieb mit elektrischer Energie versorgt werden müssen. Weitere Einsatzgebiete für derartige Schleppleitungen sind Krane, Einschienenhängebahnen und Beschickungs- und Bearbeitungsmaschinen. Diese Schleppleitung besteht im Wesentlichen aus einer Schiene 1, an der eine Energieleitung 2 über eine Vielzahl von Aufhängeelementen 3 girlandenartig aufgehängt ist. Die Aufhängeelemente 3 sind entlang der Schiene 1 in deren Längsrichtung L bewegbar, um die Energieleitung 2 dem nicht dargestellten bewegbaren elektrischen Verbraucher nachzuführen. Je nach Position des elektrischen Verbrauchers relativ zu der Schiene 1 sind die Aufhängeelemente 3, von denen eine Vielzahl in Längsrichtung L der Schiene 1 gesehen hintereinander angeordnet sind, enger beieinander oder weiter voneinander entfernt, so dass die herunterhängenden Schlaufen der Energieleitung 2 weiter oder schmaler sind. Die Energieleitung 2 ist üblicherweise als Flachleitung mit mehreren nebeneinander angeordneten elektrischen Leitungen ausgebildet.

Grundsätzlich ist es auch möglich, mit den zuvor beschriebenen Aufhängeelementen 3 und der Schiene 1 eine pneumatische Energieleitung 2 nach Art einer Schleppleitung aufzuhängen.

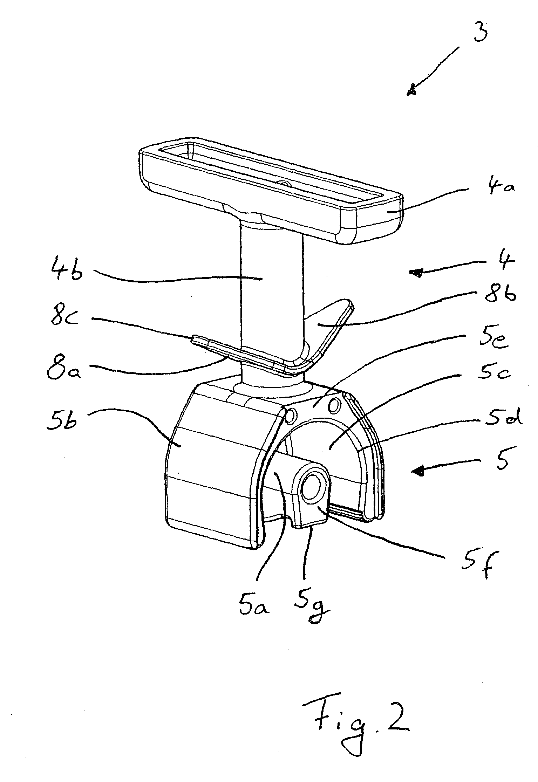

Die Figur 2 zeigt eine perspektivische Ansicht eines Aufhängeelementes 3 in einer ersten Ausführungsform. Das Aufhängeelement 3 kann grob in ein oberes Tragteil 4 und ein hieran befestigtes beziehungsweise aufgehängtes unteres Halteteil 5 aufgeteilt werden. Mittels des Tragteils 4 wird das Aufhängeelement 3 mit der Schiene 1 verbunden. Hierfür ist das Tragteil 4 im Wesentlichen T-förmig ausgebildet mit einem oberen quaderförmigen Gleitteil 4a und einem zentral hiermit verbundenen rundrohrförmigen Stabteil 4b. Das Gleitteil 4a ist starr mit dem Stabteil 4b verbunden. Das Gleitteil 4a weist eine flache quaderförmige Form auf und ist nach oben hin offen und insgesamt hohl ausgebildet. Mittels des Gleitteils 4a gleitet das Aufhängeelement 3a innerhalb der Schiene 1 in und entgegen der Längsrichtung L.

An dem dem Gleitteil 4a abgewandten unteren Ende des Stabteils 4b schließt sich das Halteteil 5 an, an dem die Energieleitung 2 aufgehängt wird. Das Halteteil 5 besteht im Wesentlichen aus einem bolzenförmigen Aufnahmeelement 5a, das in Bezug auf die Figur 2 gesehen an seinem hinteren Ende an einem Verbindungselement 5b befestigt ist. Das Aufnahmeelement 5a ist mit seiner Längserstreckung bei vertikal ausgerichtetem Stabteil 4b horizontal ausgerichtet sowie dessen Längserstreckung verläuft parallel zur Längserstreckung des Gleitteils 4a. Dadurch dass das Aufnahmeelement 5a nur an einem Ende an dem Verbindungselement 5b befestigt ist und das Verbindungselement 5b an dem unteren Ende des Stabteils 4b befestigt ist, sowie das Verbindungselement 5b nicht nur als einfacher vertikaler Steg sondern insgesamt nach Art eines Radkastens aufgebaut ist, entsteht zwischen dem Verbindungselement 5b und dem Aufnahmeelement 5a ein insgesamt u-förmiger Raum 5c. Hierbei ist zu beachten, dass das U auf dem Kopf steht. Dieser u-förmige Raum 5c ist in der Montagestellung nach einer Seite und zwar der dem mit dem Verbindungselement 5b verbundenen Ende des Aufnahmeelementes 5a auf der gegenüberliegenden Seite 5e offen. Diese Öffnung 5d des u-förmigen Raums 5c dient dazu, die Energieleitung 2, die vorzugsweise als Flachleitung ausgebildet ist, seitlich in den u-förmigen Raum 5c in Form einer Schlaufe einzuschieben. Hierbei kommt die Energieleitung 2 auf dem Aufnahmeelement 5a zum Ruhen, da in üblicherweise das Aufhängeelement 3 mit vertikal ausgerichtetem Stabteil 4b an einer nach unten offenen und c-förmigen Schiene 1 aufgehängt wird. Aus Gründen der Übersichtlichkeit ist in Figur 2 die Schlaufe der Energieleitung 2 nicht dargestellt.

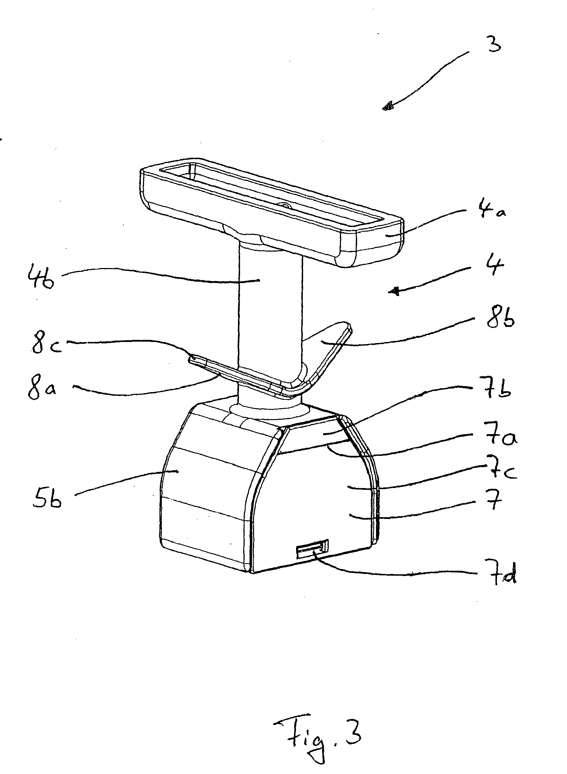

Des Weiteren ist der Figur 2 zu entnehmen, dass an dem Halteteil 5, das insgesamt eine quaderförmige Außenform aufweist, wobei zwei gegenüberliegende der oberen Kanten zueinander abgeflacht beziehungsweise abgerundet sind. An der Seite 5e des Halteteils 5, an der sich die Öffnung 5d befindet, sind im oberen Bereich zwei Bohrungen 6a und 6b, die zur Aufnahme von Steckelementen eines Deckels 7 (siehe Figur 3) dienen, angeordnet. Auch ist in der Figur 2 gezeigt, dass an dem freien Ende 5f ein nach unten gerichteter Vorsprung 5g angeordnet ist, der als Wiederlager für eine Schnappverbindung für ein Schließen des Deckels 7 dient.

Ferner zeigt die Figur 2, dass an dem Stabteil 4b des Aufhängeelementes 3 zwei Verriegelungselemente 8a, 8b angeordnet sind. Die Verriegelungselemente 8a, 8b haben in der Draufsicht gesehen die Form eines gleichschenkligen und langgestreckten Dreiecks. Die Spitze 8c der Verriegelungselemente 8a, 8b ist von dem Stabteil 4b abgewandt. Auch sind bei vertikal ausgerichtetem Stabteil 4b die Verriegelungselemente 8a, 8b nicht horizontal sondern ausgehend von dem Stabteil 4b in Richtung des Gleitteils 4a linear ansteigend ausgebildet. Der zwischen dem Stabteil 4b und den Verriegelungselementen 8a, 8b eingeschlossene Winkel liegt etwa im Bereich von 60° bis 80° und ist vorzugsweise 70°. Außerdem sind die in Bezug auf das Stabteil 4b gegenüberliegend angeordneten Verriegelungselemente 8a, 8b mit ihrer Längserstreckung rechtwinklig zur Längserstreckung des Gleitteils 4a ausgerichtet.

Das Aufhängelement 3 mit seinem Tragteil 4, dem Halteteil 5 und den Verriegelungselementen 8a, 8b ist einteilig als Kunststoffspritzgussteil hergestellt.

In der Figur 3 ist eine der Figur 2 entsprechende perspektivische Ansicht des Aufhängeelementes 3 in der ersten Ausführungsform dargestellt, wobei jedoch der u-förmige Raum 5c des Halteteils 5 mit einem Verschließelement 7 in Form eines Deckels geschlossen ist. In Bezug auf die weiteren in dieser Figur 3 dargestellten Bestandteile des Aufhängeelementes 3 wird auf die vorgehende Beschreibung zur Figur 2 verwiesen. In Bezug auf das Verschließelement 7 ist zu erkennen, dass im oberen Bereich ein horizontal ausgerichtetes Scharnier 7a, vorzugsweise ein Filmscharnier, verläuft, welches das Verschließelement 7 in ein schmales oberes Festteil 7b und ein sich hieran anschließendes unteres Klappteil 7c aufteilt. Das Scharnier 7a befindet sich in etwa im Bereich des oberen Endes des Raumes 5c, so dass durch ein nach oben Klappen des Klappteils 7c die vollständige Öffnung 5d des Raumes 5c freigegeben wird, um die Energieleitung 2 einlegen zu können. Das Festteil 7b ist über auf der Rückseite angeordnete und nicht dargestellte Stifte in die Bohrungen 6a, 6b (siehe Figur 2) im Zuge der Montage unter einem Presssitz oder einer Schnappverbindung eingedrückt worden, und somit hinreichend fest mit dem Verbindungselement 5b des Halteteils 5 verbunden. Dementsprechend kann das Klappteil 7c des Verschließelementes 7 um das Scharnier 7a herum aus einer geschlossenen nahezu vertikalen Stellung in eine geöffnete nahezu horizontale Stellung bewegt werden. Um das Klappteil 7c in seiner geschlossenen Stellung halten zu können, ist an seinem unteren Ende ein nach innen ragender und hakenförmiger Vorsprung 7d vorgesehen, der eine Schnappverbindung mit dem weiteren Vorsprung 5g des Aufnahmeelementes 5a eingehen kann. Für ein Auswechseln der Energieleitung 2 kann somit das Halteteil 7 wieder geöffnet werden.

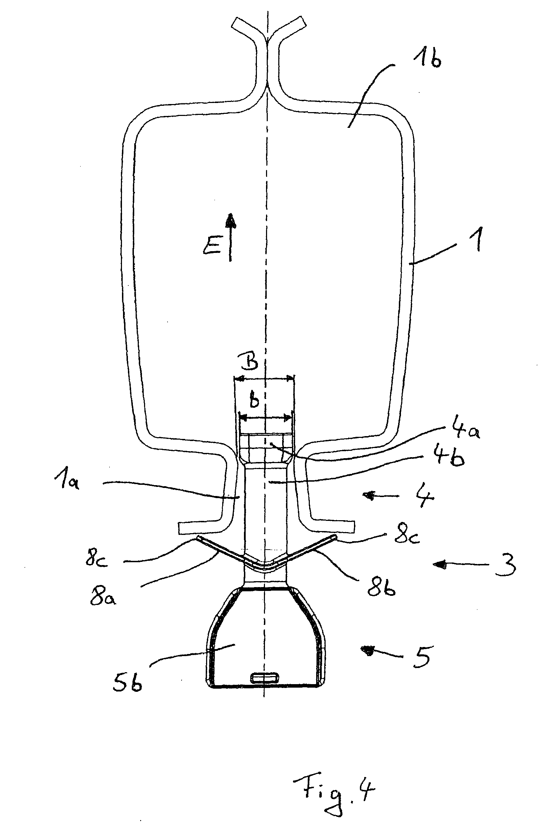

Die Figur 4 zeigt eine Schnittansicht durch eine Schiene 1 zusammen mit einem Aufhängeelement 3 in der ersten Ausführungsform, das sich in einer sogenannten Montagestellung befindet. In dieser Montagestellung kann das Gleitteil 4a des Aufhängeelements 3 durch einen Längsspalt 1 a der insgesamt im Wesentlichen c-förmig ausgebildeten Schiene 1 in deren Hohlraum 1 b eingeführt werden. Hierzu wird das Aufhängeleement 3 so ausgerichtet, dass dessen Gleitteil 4a mit seiner Längserstreckung in Längsrichtung L der Schiene 1 und somit in Längsrichtung des Längsspaltes 1a der Schiene 1 ausgerichtet ist. Die Breite b des Gleitteils 4a ist so gewählt, dass diese geringfügig schmaler ist als die Breite B des Längsspaltes 1 a der Schiene 1. Nachdem das Gleitteil 4a soweit durch den Längsspalt 1a hindurch gesteckt ist, dass dieses sich vollständig in dem sich an den Längsspalt 1a anschließenden und erweiternden Hohlraum 1 b der Schiene 1 befindet, wird das Aufhängeelement 3 um die Längserstreckung des Stabteils 4b um etwa 90° gedreht, so dass sich nun das Gleitteil 4a quer zur Längserstreckung L der Schiene 1 erstreckt und somit den Längsspalt 1a überbrückt. Diese Stellung des Gleitteils 4a wird auch Betriebsstellung genannt.

Des Weiteren ist aus der Figur 4 ersichtlich, dass die Verriegelungselemente 8a, 8b in der Montagestellung nicht in Kontakt mit der Schiene 1 treten. Bei einem anderen Typ der Schiene 1 können bei vollständig in den Längsspalt 1a der Schiene 1 eingesteckten Gleitteil 4a die beiden Verriegelungselemente 8a, 8b bereits an der Schiene 1 anliegen und bereits federnd in Richtung des Halteteils 5 verformt sein. Auch ist während der Montage und der Demontage des Aufhängeelementes 3 an die Schiene 1 keine Energieleitung 2 in dessen Halteteil 5 eingelegt. Grundsätzlich ist es möglich, bei einer Demontage die Energieleitung 2 in dem Halteteil 5 zu belassen.

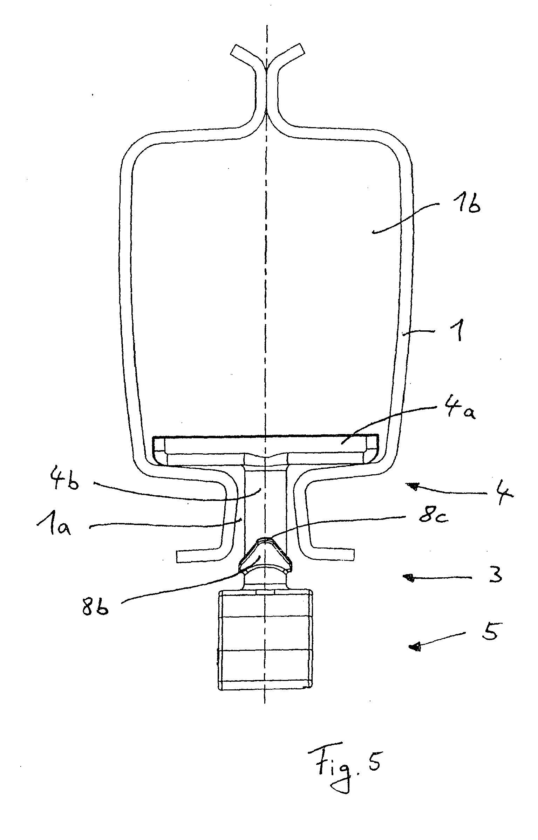

In der Figur 5 ist eine der Figur 4 entsprechende Ansicht der Schiene 1 mit dem Aufhängeelement 3 in der ersten Ausführungsform dargestellt. Hier befindet sich jedoch das Aufhängeelement 3 nicht mehr in der Montagestellung wie in der Figur 4 gezeigt sondern in der sogenannten Betriebsstellung, in dem das Gleitteil 4a des Tragteils 4 quer zur Längsrichtung L der Schiene 1 ausgerichtet ist. In der hier gezeigten Betriebsstellung tauchen die Verriegelungselemente 8a, 8b zumindest mit ihren Spitzen 8c in den Längsspalt 1a der Schiene 1 ein. Somit kann verhindert werden, dass das Gleitteil 4a sich aus der Betriebsstellung heraus in die Montagestellung verdreht und somit nach unten aus dem Längsspalt 1a herausrutschen kann. Des Weiteren übernehmen die Verriegelungselemente 8a, 8b eine Führungsfunktion, da während des Verschiebens der Energieleitung 2 entlang der Schiene 1 das Gleitteil 4a sich aus seiner genauen Betriebsstellung, in der das Gleitteil 4a mit seiner Längserstreckung rechtwinklig zu der Längserstreckung des Längsspalt 1a ausgerichtet ist, leicht im oder gegen den Uhrzeigersinn um die Längsachse des Stabteils 4b dreht. Diese Drehbewegung wird von den Verriegelungselementen 8a, 8b begrenzt, da diese sich in Folge der Drehbewegung an der seitlichen Innenwand des Längsspalts 1a anlegen. Da die Verriegelungselemente 8a, 8b federnd ausgebildet sind, können für eine Demontage der Aufhängeelemente 7 diese aus dem Längsspalt 1 a federnd heraus gebogen werden. Dann ist ein freies Zurückdrehen des Aufhängeelementes 3 aus der Betriebsstellung in die Montagestellung möglich und das Gleitteil 4a kann aus dem Längsschlitz 1 a nach unten heraus entfernt werden. Zuvor ist jedoch vorzugsweise die Energieleitung 2 von dem Halteteil 5 zu entfernen. Bei Bedarf kann die Energieleitung 2 auch in den Halteteilen 5 belassen werden.

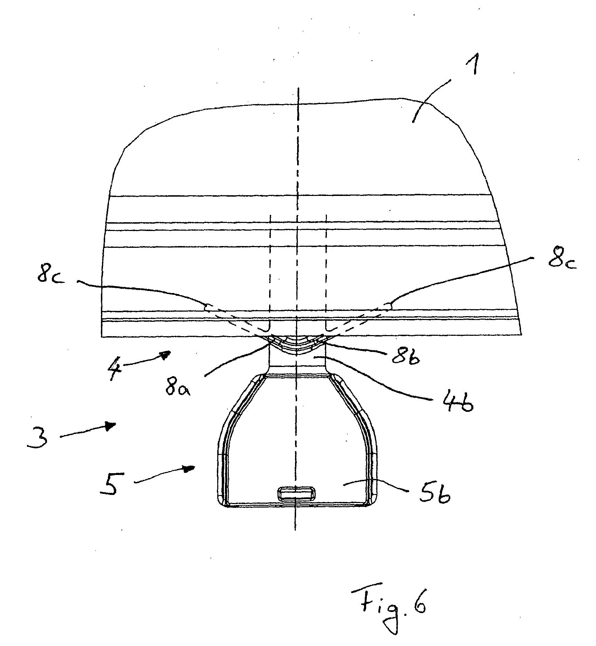

Die Figur 6 zeigt eine Seitenansicht von der Figur 5. In dieser Figur ist ein Aufhängeelement 3 in seiner Betriebsstellung dargestellt. Es ist ersichtlich, dass die Verriegelungselemente 8a, 8b zumindestens mit ihren Spitzen 8c in den Längsspalt 1 a der Schiene 1 eintauchen. Im vorliegenden Ausführungsbeispiel tauchen die Verriegelungselemente 8a, 8b etwa mit einem Drittel ihrer Länge in den Längsspalt 1a ein.

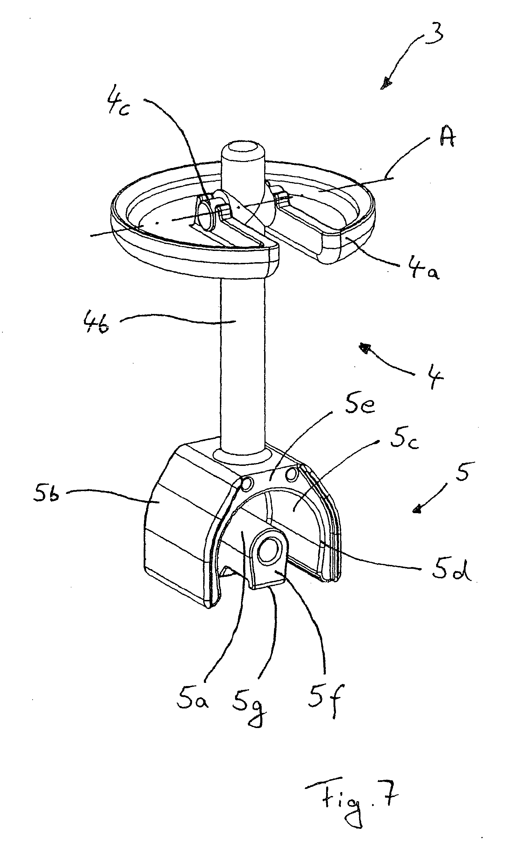

Des Weiteren zeigt die Figur 7 eine perspektivische Ansicht eines Aufhängeelementes 3 in einer zweiten Ausführungsform. In Bezug auf das Halteteil 5 wird auf die Beschreibung zu den Figuren 2 und 3 verwiesen. Auch hier hat das Aufhängeelement 3 neben dem unteren Halteteil 5 ein oberes Tragteil 4. Das Tragteil 4 ist im Wesentlichen T-förmig ausgebildet mit einem oberen tellerförmigen Gleitteil 4a und einem zentral hiermit verbundenen rundrohrförmigen Stabteil 4b. Mittels des Gleitteils 4a gleitet das Aufhängeelement 3a innerhalb der Schiene 1 in und entgegen der Längsrichtung L. Das Gleitteil 4a ist nicht wie bei der ersten Ausführungsform starr an dem Stabteil 4b befestigt sondern über eine Kippachse 4c mit einer Achse A, die rechtwinklig zur Längserstreckung des Stabteils 4b ausgerichtet ist, an dem dem Halteteil 5 abgewandten und oberen Ende des Stabteils 4b gelenkig befestigt. Das Gleitteil 4a kann somit quer und parallel zur Längserstreckung des Stabteils 4b ausgerichtet werden. In der Figur 7 ist Gleitteil 4a rechtwinklig zur Längserstreckung des Stabteils 4b ausgerichtet in der sogenannten Betriebsstellung dargestellt.

Auch das Aufhängelement 3 in der zweiten Ausführungsform ist mit seinem Tragteil 4 und dem Halteteil 5 einteilig als Kunststoffspritzgussteil hergestellt.

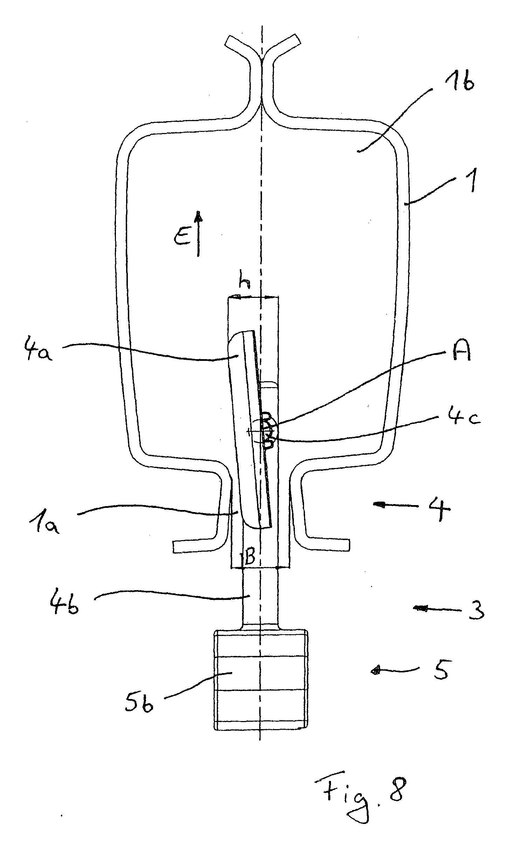

Die Figur 8 zeigt eine Schnittansicht durch eine Schiene 1 zusammen mit einem Aufhängeelement 3 in der zweiten Ausführungsform, das sich in einer sogenannten Montagestellung befindet. In dieser Moritagestellung kann das Gleitteil 4a des Aufhängeelements 3 durch einen Längsspalt 1a der insgesamt im Wesentlichen c-förmig ausgebildeten Schiene 1 in deren Hohlraum 1b eingeführt werden. Hierzu wird das Aufhängeleement 3 so ausgerichtet, dass dessen Gleitteil 4a mit seiner Längserstreckung in Längsrichtung L der Schiene 1 und somit in Längsrichtung des Längsspaltes 1a der Schiene 1 sowie gleichzeitig parallel zur Längserstreckung des Stabteils 4b ausgerichtet ist. Dies ist möglich, da das Gleitteil 4a um die Achse A des Stabteils 4b kippbar ist. Die Abmessung h, die aus einer Höhe des Gleitteils 4a und einer anteiligen Breite des Stabteils 4b besteht, ist so gewählt, dass diese geringfügig schmaler ist als die Breite B des Längsspaltes 1a der Schiene 1. Nachdem das Gleitteil 4a soweit durch den Längsspalt 1 a hindurch gesteckt ist, dass dieses sich vollständig in dem sich an den Längsspalt 1a anschließenden und erweiternden Hohlraum 1 b der Schiene 1 befindet, kippt dieses durch die Schwerkraft in die sogenannte Betriebsstellung, da einerseits die Kippachse 4c leichtgängig ist und andererseits in Bezug auf die Kippachse 4c das Gleitteil 4a in der Montagestellung und bei vertikaler Ausrichtung gesehen oben schwerer als unten ist. Die Kippbewegung kann auch über eine durch ein Werkzeug oder einen Fingern eines Monteurs aufgebrachte Kippkraft bewirkt werden. In der Betriebsstellung erstreckt sich das Gleitteil 4a somit quer zur Längserstreckung L der Schiene 1 und überbrückt somit den Längsspalt 1 a.

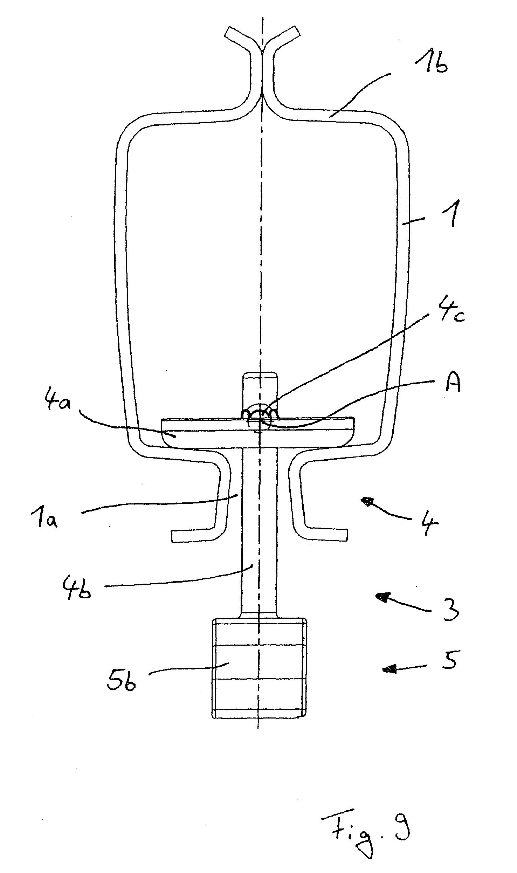

In der Figur 9 ist eine der Figur 8 entsprechende Ansicht der Schiene 1 mit dem Aufhängeelement 3 in der zweiten Ausführungsform dargestellt. Hier befindet sich jedoch das Aufhängeelement 3 nicht mehr in der Montagestellung wie in der Figur 8 gezeigt sondern in der sogenannten Betriebsstellung, in dem das Gleitteil 4a des Tragteils 4 quer zur Längsrichtung L der Schiene 1 ausgerichtet ist. Da das Gleitteil 4a einen runden Querschnitt hat, kann sich beim Bewegen der Energieleitung 2 entlang der Schiene 1 das Gleitteil 4a aus seiner genauen Betriebsstellung, in der die Kippachse 4c mit seiner Längserstreckung parallel zu der Längserstreckung des Längsspalt 1a ausgerichtet ist, leicht im oder gegen den Uhrzeigersinn um die Längsachse des Stabteils 4b drehen, ohne dass eine Gefahr besteht, dass das tellerförmige Gleitteil 4a nach unten aus dem Längsspalt 1a heraus rutscht. Für eine Demontage ist durch den Längsspalt 1 a hindurch das Gleitteil 4a mit einem stabförmigen Werkzeug oder mittels der Finger eines Monteurs aufzustellen, um dann aus dem Längsschlitz 1 a nach unten heraus entfernt werden. Zuvor ist jedoch vorzugsweise die Energieleitung 2 von dem Halteteil 5 zu entfernen. Bei Bedarf kann die Energieleitung 2 auch in den Halteteilen 5 belassen werden.

### Bezugszeichenliste

- 1: Schiene
- 1a: Längsspalt
- 1b: Hohlraum
- 2: Energieleitung
- 3: Aufhängeelement
- 4: Tragteil
- 4a: Gleitteil
- 4b: Stabteil
- 4c: Kippachse
- 5: Halteteil
- 5a: Aufnahmeelement
- 5b: Verbindungselement
- 5c: Raum
- 5d: Öffnung
- 5e: Seite
- 5f: freies Ende
- 5g: Vorsprung
- 6a: Bohrung
- 6b: Bohrung
- 7: Verschließelement
- 7a: Scharnier
- 7b: Festteil
- 7c: Klappteil
- 7d: Vorsprung
- 8a, 8b: Verriegelungselement
- 8c: Spitze

- A: Achse
- b: Breite
- B: Breite
- E: Einsteckrichtung
- h: Höhe
- L: Längsrichtung

## Patentansprüche

1. Anordnung mit einer hohlprofilförmigen und über einen Längsspalt (1 a) offenen Schiene (1) und mit mehreren entlang der Schiene (1) und somit entlang des Längsspalts (1 a) bewegbaren Aufhängeelementen (3), an denen eine Energieleitung (2) befestigt ist, wobei die Aufhängeelemente (3) für eine Befestigung an der Schiene (1) derart ausgestaltet sind, dass ein Tragteil (4) von diesen von außen über den Längsspalt (1a) in einen Hohlraum (1b) der Schiene (1) in einer Montagestellung einführbar ist, **dadurch gekennzeichnet, dass** das Tragteil (4) ein Gleitteil (4a) aufweist und das Gleitteil (4a) nach einer Bewegung des Tragteils (4) aus der Montagestellung in eine Betriebsstellung den Längsspalt (1 a) überbrückt und dass das Tragteil (4) in der Betriebsstellung und in Längsrichtung (L) der Schiene (1) gesehen T-förmig ausgebildet ist und ein aus der Schiene (1) heraus ragendes Stabteil (4b) und ein in der Schiene (1) ruhendes Gleitteil (4a) aufweist, das im mittleren Bereich an dem Stabteil (4b) befestigt ist.

2. Anordnung nach Anspruch 1, **dadurch gekennzeichnet, dass** das Stabteil (4b) zylinderförmig ist.

3. Anordnung nach Anspruch 1 oder 2, **dadurch gekennzeichnet, dass** das Gleitteil (4a) quaderförmig ausgebildet und starr mit dem Stabteil (4b) verbunden ist.

4. Anordnung nach Anspruch 3, **dadurch gekennzeichnet, dass** an den Stabteilen (4b) jeweils mindestens ein Verriegelungselement (8a, 8b) angeordnet ist, das sich an der Schiene (1) abstützt und das Tragteil (4) an einer Bewegung aus der Betriebsstellung in die Montagestellung hindert.

5. Anordnung nach Anspruch 4, **dadurch gekennzeichnet, dass** das Verriegelungselement (8a, 8b) armförmig und federnd ausgebildet ist und in der Betriebsstellung in den Längsspalt (1a) der Schiene (1) hinein ragt.

6. Anordnung nach Anspruch 4 oder 5, **dadurch gekennzeichnet, dass** an jedem Aufhängeelement (3) zwei Verriegelungselemente (8a, 8b) angeordnet sind.

7. Anordnung nach einem der Ansprüche 4 bis 6, **dadurch gekennzeichnet, dass** das Verriegelungselement (8a, 8b) im Bereich des dem Gleitteil (4a) abgewandten Endes des Stabteils (4b) befestigt ist, in der Betriebsstellung des Aufhängeelementes (3) gesehen in Richtung des Längsspalt (1a) geneigt ist und sich ausgehend von dem Stabteil (4b) verjüngt.

8. Anordnung nach Anspruch 1 oder 2, **dadurch gekennzeichnet, dass** das Gleitteil (4a) um eine Achse (A) kippbar an dem dem Halteteil (5) abgewandten Ende des Stabteils (4b) angeordnet ist und die Achse (A) quer zur Längserstreckung des Stabteils (4b) ausgerichtet ist.

9. Anordnung nach Anspruch 8, **dadurch gekennzeichnet, dass** das Gleitteil (4a) tellerförmig ausgebildet ist.

10. Anordnung nach einem der Ansprüche 1 bis 9, **dadurch gekennzeichnet, dass** das Aufhängeelement (3) neben dem Tragteil (4) aus einem Halteteil (5) besteht, an dem die Energieleitung (2) aufgehängt ist.

11. Anordnung nach Anspruch 10, **dadurch gekennzeichnet, dass** das Halteteil (5) ein längliches Aufnahmeelement (5a) aufweist, dass die Energieleitung (2) teilweise umschlingt, das an einem Ende über ein Verbindungselement (5b) an dem Tragteil (4) befestigt ist und dessen anderes Ende (5f) über ein Verschließelement (7) mit dem Halteteil (5) nach Einlegen der Energieleitung (2) verbindbar ist.

12. Anordnung nach Anspruch 11, **dadurch gekennzeichnet, dass** das Verbindungselement (5b) nach Art eines einseitig offenen Radkastens mit einer Öffnung (5d) ausgebildet ist und das Verschließelement (8a, 8b) deckelartig ausgebildet ist und die Öffnung (5d) verschließt.

13. Anordnung nach einem der Ansprüche 1 bis 12, **dadurch gekennzeichnet, dass** die Energieleitung (2) als Flachleitung mit mehreren elektrischen Leitungen ausgebildet ist.

14. Anordnung nach einem der Ansprüche 1 bis 13, **dadurch gekennzeichnet, dass** die Schiene (1) einen sich von dem Längsspalt (1a) aus erweiternden Hohlraum (1b) und einen c-förmigen Querschnitt hat und deren Längsspalt (1a) nach unten weist.

15. Anordnung nach einem der Ansprüche 1 bis 14, **dadurch gekennzeichnet, dass** das Aufhängeelement (3) ein Kunststoffspritzgussteil ist.

## Claims

1. Arrangement with a rail (1) of hollow profile form and open over a longitudinal gap (1a) and with a number of suspension elements (3) movable along the rail (1) and therefore along the longitudinal gap (1a), secured to which is a power lead (2), wherein the suspension elements (3) are designed for securing to the rail (1) in such a way that a carrier part (4) of these elements can be introduced from outside via the longitudinal gap (1 a) into a cavity (1 b) of the rail (1) in an installation position, **characterized in that** the carrier part (4) exhibits a slide part (4a), and the slide part (4a), after a movement of the carrier part (4) out of the installation position into an operational position, bridges the longitudinal gap (1a), and that the carrier part (4), seen in the operational position and in the longitudinal direction (L) of the rail, is designed in a T-shape, and exhibits a bar part (4b) projecting out of the rail (1) and a slide part (4a) resting in the rail (1), which is secured in the middle area to the bar part (4b).

2. Arrangement according to Claim 1, **characterised in that** the bar part (4b) is cylindrical in shape.

3. Arrangement according to Claim 1 or 2, **characterised in that** the slide part (4a) is designed as parallelepiped in shape and is rigidly connected to the bar part (4b).

4. Arrangement according to Claim 3, **characterised in that** in each case at least one locking element (8a, 8b) is arranged at the bar parts (4b), which is supported on the rail (1) and prevents the carrier part (4) from moving out of the operational position into the installation position.

5. Arrangement according to Claim 4, **characterised in that** the locking element (8a, 8b) is designed in the shape of an arm and is spring-loaded, and in the operational position projects into the longitudinal gap (1a) of the rail (1).

6. Arrangement according to Claim 4 or 5, **characterised in that** two locking elements (8a, 8b) are arranged on each suspension element (3).

7. Arrangement according to one of Claims 4 to 6, **characterised in that** the locking element (8a, 8b) is secured in the area of the end of the bar part (4b) facing away from the slide part (4a), is inclined in the direction of the longitudinal gap (1 a) seen in the operational position of the suspension element (3), and tapers in the direction away from the bar part (4b).

8. Arrangement according to Claim 1 or 2, **characterised in that** the slide part (4a) is arranged such as to be able to tilt about an axis (A) at the end of the bar part (4b) facing away from the retaining part (5), and the axis (A) is aligned transverse to the longitudinal extension of the bar part (4b).

9. Arrangement according to Claim 8, **characterised in that** the slide part (4a) is designed in the shape of a plate.

10. Arrangement according to one of Claims 1 to 9, **characterised in that** the suspension element (3) consists, in addition to the carrier part (4), of a retaining part (5), on which the power lead (2) is suspended.

11. Arrangement according to Claim 10, **characterised in that** the retaining part (5) exhibits a longitudinal accommodation element (5a), around which the power lead (2) is partially looped, which is secured to the carrier part (4) at one end by means of a connection element (5b), and the other end (5f) of which can be connected by a closure element (7) to the retaining part (5) after the placement of the power lead (2).

12. Arrangement according to Claim 11, **characterised in that** the connection element (5b) is formed in the manner of a wheelbox, open on one side, with an aperture (5d), and the closure element (8a, 8b) is formed in the manner of a cover and closes the aperture (5d).

13. Arrangement according to one of Claims 1 to 12, **characterised in that** the power lead (2) is designed as a flat lead with several electrical leads.

14. Arrangement according to one of Claims 1 to 13, **characterised in that** the rail (1) has a cavity (1 b) which broadens out from the longitudinal gap (1 a) and a C-shaped cross-section, and of which the longitudinal gap (1a) faces downwards.

15. Arrangement according to one of Claims 1 to 14, **characterised in that** the suspension element (3) is a plastic injection-moulded component.

## Revendications

1. Dispositif comportant une glissière (1) en forme de profilé creux et ouverte sur une fente longitudinale (1a) et plusieurs éléments de suspension (3) qui sont déplaçables le long de la glissière (1) et donc le long de la fente longitudinale (1a) et auxquels est suspendue une ligne d'alimentation en énergie (2), les éléments de suspension (3) étant conformés, en vue d'être fixés à la glissière (1), de telle sorte que, dans une position de montage, une partie porteuse (4) desdits éléments de suspension peut être insérée depuis l'extérieur dans un espace creux (1 b) de la glissière (1) au-dessus de la fente longitudinale (1a), **caractérisé en ce que** la partie porteuse (4) comporte une partie coulissante (4a) et la partie coulissante (4a) recouvre la fente longitudinale (1 a) après que la partie porteuse (4) a été déplacée de la position de montage dans une position de fonctionnement et **en ce que** la partie porteuse (4) est conformée en T lorsque l'on regarde la glissière (1) dans la direction longitudinale (L) et dans la position de fonctionnement et possède une partie tige (4b) qui fait saillie de la glissière (1) et une partie coulissante (4a) qui repose dans la glissière (1) et qui est fixée à la partie tige (4b) dans la région médiane.

2. Dispositif selon la revendication 1, **caractérisé en ce que** la partie tige (4b) a une forme cylindrique.

3. Dispositif selon la revendication 1 ou 2, **caractérisé en ce que** la partie coulissante (4) a une conformation parallélépipédique et est reliée rigidement à la partie tige (4b).

4. Dispositif selon la revendication 3, **caractérisé en ce qu'**au niveau de chacune des parties tiges (4) est disposé au moins un élément de verrouillage (8a, 8b) qui s'appuie sur la glissière (1) et qui empêche la partie porteuse (4) de se déplacer de la position de fonctionnement dans la position de montage.

5. Dispositif selon la revendication 4, **caractérisé en ce que** l'élément de verrouillage (8a, 8b) est conformé en bras élastique et fait saillie, dans la position de fonctionnement, dans la fente longitudinale (1 a) de la glissière (1).

6. Dispositif selon la revendication 4 ou 5, **caractérisé en ce qu'**au niveau de chaque élément de suspension (3) sont disposés deux éléments de verrouillage (8a, 8b).

7. Dispositif selon l'une des revendications 4 à 6, **caractérisé en ce que** l'élément de verrouillage (8a, 8b) est fixé dans la région de l'extrémité de la partie tige (4) qui opposée à la partie coulissante (4), est inclinée en direction de la fente longitudinale (1a) lorsque l'on regarde l'élément de suspension (3) dans la position de fonctionnement et s'amincit en partant de la partie tige (4b).

8. Dispositif selon la revendication 1 ou 2, **caractérisé en ce que** la partie coulissante (4a) est disposée à l'extrémité de la partie tige (4b) opposée à la partie de retenue (5) de façon à pouvoir basculer autour d'un axe (A) et l'axe (A) est orienté transversalement à l'extension longitudinale de la partie tige (4b).

9. Dispositif selon la revendication 8, **caractérisé en ce que** la partie coulissante (4a) est conformée en disque.

10. Dispositif selon l'une des revendications 1 à 9, **caractérisé en ce que** l'élément de suspension (3) est constitué, outre la partie porteuse (4), d'une partie de retenue (5) à laquelle la ligne d'alimentation d'énergie (2) est suspendue.

11. Dispositif selon la revendication 10, **caractérisé en ce que** la partie de retenue (5) comporte un élément de réception allongé (5a) qui est entouré au moins partiellement par la ligne d'alimentation d'énergie (2), qui est fixé par une extrémité à la partie porteuse (4) via un élément de liaison (5b) et dont l'autre extrémité (5f) peut être reliée à la partie de retenue (5) via un élément de fermeture (7f) après avoir introduit la ligne d'alimentation d'énergie (2).

12. Dispositif selon la revendication 11, **caractérisé en ce que** l'élément de liaison (5b) est conformé à la manière d'un carter de roue ouvert sur un côté et doté d'une ouverture (5d) et l'élément de fermeture (8a, 8b) est conformé en couvercle et ferme l'ouverture (5d).

13. Dispositif selon l'une des revendications 1 à 12, **caractérisé en ce que** la ligne d'alimentation en énergie (2) est conformée en conducteur plat comportant plusieurs lignes électriques.

14. Dispositif selon l'une des revendications 1 à 13, **caractérisé en ce que** la glissière (1) possède un espace creux (1b) qui s'évase depuis la fente longitudinale (1a) et a une section en forme de C et **en ce que** la fente longitudinale (1a) de ladite glissière est dirigée vers le bas.

15. Dispositif selon l'une des revendications 1 à 14, **caractérisé en ce que** l'élément de suspension (3) est une pièce de matière plastique moulée par injection.
